**Europäisches Patentamt**

**European Patent Office**

**Office européen des brevets**

(19)

(11) Veröffentlichungsnummer: **0 129 808**
**A2**

# (12) EUROPÄISCHE PATENTANMELDUNG

(21) Anmeldenummer: **84106898.4**

(22) Anmeldetag: **16.06.84**

(51) Int. Cl.⁴: **C 09 J 3/16**
C 08 G 18/10, C 08 L 75/04
//C08K5/32, B05D1/14,
(C08L75/04, 75/00, 79/00)

(30) Priorität: 24.06.83 DE 3322695
07.01.84 DE 3400340

(43) Veröffentlichungstag der Anmeldung:
02.01.85 Patentblatt 85/1

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Özelli, Riza Nur, Dr.
Stephanusstrasse 37
D-4040 Neuss 22(DE)

(72) Erfinder: Hoffmann, Hans-Josef
Möhlenring 63
D-4152 Kempen 1(DE)

(72) Erfinder: Lippert, Hartmut
Geschwister-Scholl-Strasse 61
D-4019 Monheim(DE)

(54) Beflockungskleber für flexible Substrate.

(57) Die Erfindung betrifft einen Klebstoff zum Beflocken von Elastomeren, insbesondere unpolaren Elastomeren wie EPDM. Der Klebstoff besteht aus einem Polyurethan-Prepolymeren mit Isocyanatendgruppen, gelöst oder dispergiert in organischen Lösungsmitteln und enthält als Haftverbesserer ein Umsetzungsprodukt von aromatischen Diisocyanaten mit mehrfunktionellen Epoxiden, insbesondere mit Triglycidylisocyanurat. Gewünschtenfalls kann durch Zugabe aromatischer Nitrosoverbindungen eine weitere Verbesserung der Klebefestigkeit erreicht werden.

EP 0 129 808 A2

·Henkelstraße 67
4000 Düsseldorf, den 17.1.1984

0129808
HENKEL KGaA
ZR-FE/Patente

Dr. Wik/Br/Po

P a t e n t a n m e l d u n g

### D 6873/7002 EP

## "Beflockungskleber für flexible Substrate"

Die Erfindung liegt auf dem Gebiet der Klebetechnik. Sie schlägt einen neuen Klebstoff vor, der es erlaubt, beflockte, flexible Gegenstände z.B. mit Fasern beflockte Gummiprofile in verbesserter Qualität herzustellen.

Es ist bekannt, vulkanisierte oder unvulkanisierte Elastomere oder noch andere Kunststoffoberflächen mit einer Klebstoffschicht zu bedecken und in einem elektrischen Feld darauf senkrecht stehende Faserkurzschnitte aufzubringen. Die so hergestellten elektrostatisch beflockten Gegenstände zeichnen sich durch eine textilartige Oberfläche und oftmals geringere Reibung z. B. gegenüber Glas aus. Eine der zahlreichen Anwendungen dieser Produkte ist der Einbau als Dichtmanschette in Fensterschächte von Automobilen.

Zur Herstellung derartiger beflockter, flexibler Gegenstände wurde in der deutschen Offenlegungsschrift 29 16 909 vorgeschlagen, einen zweikomponentigen Kleber aus dem Reaktionsprodukt von (Meth)acrylsäure und epoxidierten Polymeren einerseits und einer aminogruppenhaltigen Verbindung andererseits sowie strahlenhärtenden Zusätzen zu verwenden. Mit derartigen Epoxidklebstoffen lassen sich jedoch auf unpolaren Elastomeren nur geringe Festigkeiten erzielen, so daß die Flocken bei mechanischer Beanspruchung wie sie z.B.

. . .

in den Fensterschächten von Automobilen beim Öffnen und Schließen der Fenster auftreten, nach einiger Zeit aus der Klebeschicht ausgerissen werden. Die deutsche Offenlegungsschrift 30 11 438 schlägt daher für das Beflocken eines unpolaren Elastomeren die Verwendung eines Primers zusammen mit einem Epoxidkleber vor. Als Primer wird eine Lösung eines chlorierten amorphen Polypropylens in Toluol verwendet. Wenngleich auf diesem Wege möglicherweise bessere Ergebnisse erzielt werden, so ist die Vorgehensweise doch relativ aufwendig.

In der japanischen Patentanmeldung 78,136,079 wird ein Verfahren zum Beflocken von Mischungen aus Ethylenpropylendienterpolymeren (EPDM) mit einem OH-funktionellen Butadienelastomeren mit Hilfe eines Polyurethan-Klebstoffes vorgeschlagen. Der vorgeschlagene Klebstoff ist jedoch nicht geeignet, auch bei völlig unpolaren Elastomeren, also z.B. reinen EPDM-Elastomeren zu abriebfesten Beflockungen zu führen, wie dies in der Praxis gefordert wird.

Es ist somit Aufgabe der Erfindung, einen neuen Klebstoff bereitzustellen, der es erlaubt, unpolare Elastomere insbesondere EPDM-Elastomere abriebfest zu beflocken und der darüber hinaus eine erhöhte Wasserfestigkeit aufweist. Eine weitere Aufgabe der Erfindung ist die Verwendung des Klebstoffes bei der elektrostatischen Beflockung vulkanisierter sowie auch unvulkanisierter Elastomer.

Gegenstand der Erfindung ist somit ein Klebstoff für die elektrostatische Beflockung flexibler Substrate, bestehend aus

- Polyurethanprepolymeren mit Isocyanatendgruppen
- Lösung- und/oder Dispergiermitteln und gewünschtenfalls
- weiteren Hilfsstoffen,

dadurch gekennzeichnet, daß als Haftverbesserer 10 bis 80

...

- 3 -

Gewichtsprozent - bezogen auf Polyurethanprepolymere -
Reaktionsprodukte mehrfunktioneller Epoxide mit aromatischen Diisocyanaten enthalten sind.

Bei den erfindungsgemäßen Klebstoffen handelt es sich
um Polyurethanprepolymere mit endständigen Isocyanatgruppen. Es wurde überraschend gefunden, daß sich deren
Haftwirkung und Stabilität gegen Witterungseinflüsse,
insbesondere gegen Wasser durch den Zusatz von
Reaktionsprodukten mehrfunktioneller Epoxide mit aromatischen Diisocyanaten in Mengen von 10 bis 80 Gewichtsprozent deutlich verbessern lassen. Erfindungsgemäß
ist es dabei bevorzugt, Umsetzungsprodukte zu verwenden,
die ihrerseits Isocyanatendgruppen tragen, d.h. die
durch Umsetzung von 1 mol Diisocyanat pro mol Epoxidgruppe hergestellt worden sind. Derartige Umsetzungsprodukte sind im Prinzip bekannt. Ihre haftverbessernde
Wirkung in Beflockungsklebstoffe ist jedoch noch nicht
beschrieben.

Nach einer ersten Ausführungsform der Erfindung werden
als Haftverbesserer die Umsetzungsprodukte cyclischer
N-Glycidylverbindungen mit aromatischen Diisocyanaten
eingesetzt. Es sind hier besonders geeignet die Umsetzungsprodukte von N-Glycidylgruppen tragenden Heterocyclen z.B. von Triglycidylisocyanurat, von Triglycidylurazol, Diglycidylbenzimidazolon, Diglycidylhydantoin
und/oder kondensierten Glycidgruppen tragenden Hydantoinen einerseits mit Diphenylmethandiisocyanat, technischen Diphenylmethandiisocyanaten der Isocyanatgruppen
Funktionalität 2,0 bis 2,5, Toluylendiisocyanat,
Paraphenylendiisocyanat oder Xylylendiisocyanat. Die
Herstellung dieser Umsetzungsprodukte kann nach an sich

. . .

bekannten Methoden erfolgen, indem man die Ausgangsstoffe im geforderten Molverhältnis miteinander vermischt und gewünschtenfalls in Gegenwart von Lösungsmitteln bei erhöhten Temperaturen z.B. 60 bis 110 $^{\circ}$ reagieren läßt, bis keine Epoxidgruppen mehr vorhanden sind. Nach einer weiteren Ausführungsform der Erfindung werden als Haftverbesserer die Umsetzungsprodukte von mehrfunktionellen Epoxidverbindungen auf Basis Bis-Phenol A z.B. von dem Diglycidylether des Bis-Phenol A mit den vorstehend genannten aromatischen Diisocyanaten im Molverhältnis 1 : 2 verwendet.

Die neuen Beflockungsklebstoffe enthalten die Haftverbesserer vorzugsweise in Mengen von 20 bis 50 Gewichtsprozent, bezogen auf die Polyurethanprepolymeren. Die Klebstoffe können als solche auf Elastomere aufgetragen oder aufgestrichen werden, in vielen Fällen ist es jedoch gewünscht, Zubereitungen mit geringerer Viskosität zur Verfügung zu haben. Dazu werden die Prepolymeren in bekannter Weise in organischen Lösungsmitteln gelöst. Geeignete Lösungsmittel sind beispielsweise Xylol, Toluol, Methylisobutylketon und/oder Ethylenchlorid. Je nach gewünschter Viskosität stellt man dabei einen Feststoffgehalt zwischen 20 und 50 Gewichtsprozent ein.

Es ist weiterhin möglich, die Klebstoffe in an sich bekannter Weise zu Dispersionen zu verarbeiten. Man kann z.B. die Prepolymeren bei erhöhten Temperaturen, vor-zugsweise 60 - 80 $^{\circ}$C in einem organischen Lösungsmittel z.B. in Xylol, Toluol, Ketonmischungen oder chlorierten Kohlenwasserstoffen oder deren Mischungen zu glatten Dispersionen verrühren. Dabei können auch übliche Dispergiermittel zugesetzt werden, z.B. Copolymere aus ungesättigten Amiden und Estern, oder andere bei der Lackherstellung bekannte Dispergatoren.

. . .

Die erfindungsgemäßen Klebstoffe enthalten als weitere
Hilfsstoffe mehrfunktionelle aromatische Nitrosoverbindungen. Diese führen zu einer weiteren beträchtlichen
Verbesserung der Haftfestigkeit und der Bewitterungsfestigkeit der Verklebungen.

Mehrfunktionelle aromatische Nitrosoverbindungen sind
dem auf dem Elastomergebiet tätigen Klebstoff-Fachmann
bekannt. Ihre Verwendung in Klebstoffen zum Aufvulkanisieren von Kautschuk auf Metalle sind beispielsweise
im deutschen Patent 22 28 544 beschrieben. Es war jedoch nicht bekannt, daß diese Produkte die Eigenschaften von Beflockungsklebern vorteilhaft beeinflussen.

Als Bestandteil der erfindungsgemäßen verbesserten Klebstoffe sind zahlreiche mehrfunktionelle aromatische Nitrosoverbindungen geeignet. Bevorzugt sind hierbei Verbindungen, bei denen die Nitrosogruppen nicht an benachbarte C-Atome gebunden sind. Geeignet sind mehrfunktionelle Nitrosoverbindungen einkerniger oder mehrkerniger Aromaten, also mehrfunktionelle Nitrosoverbindungen auf Basis von beispielsweise Benzol, Naphthalin, Anthracen, Biphenyl oder höher kondensierten Aromaten.

Die mehrfunktionellen aromatischen Nitrosoverbindungen
können außer den Nitrosogruppen noch weitere Substituenten tragen. So sind Verbindungen geeignet, die als
weitere Substituenten Halogene wie Chlor, Brom, Fluor,
Nitrogruppen, Alkylgruppen mit einem bis zu 6 C-Atomen,
Cycloalkylgruppen, Arylalkylgruppen mit bis zu 8 C-Atomen oder Alkoxygruppen enthalten.

In der Praxis haben sich Dinitrosoverbindungen besonders bewährt. Unter diesen sind bevorzugt: m-Di-

. . .

HENKEL KGaA<br/>ZR-FE/Patente

nitrosobenzol, p-Di-nitrosobenzol, m-Di-nitrosonaphthaline, p-Di-nitrosonaphthalin, 2,5-Di-nitroso-p-cymol, 2-Methyl-1,4-di-nitrosobenzol, 2-Methyl-5-chlor-1,4-dinitrosobenzol, 2-Fluor-1,4-dinitrosobenzol, 2-Methoxy-1,3-dinitrosobenzol, 5-Chlor-1,3-dinitrosobenzol, 2-Benzyl-1,4-dinitrosobenzol und 2-Cyclohexyl-1,4-dinitrosobenzol.

Unter den genannten Verbindungen wird aus praktischen Erwägungen meist 1,4-Dinitrosobenzol gewählt. Dabei hat sich gezeigt, daß sowohl die reine Substanz ansich als auch die auf dem Markt erhältlichen, überwiegend aus 1,4-Dinitrosobenzol bestehenden Zubereitungen geeignet sind.

Die erfindungsgemäßen Klebstoffe enthalten die mehrfunktionellen aromatischen Nitrosoverbindungen in Mengen von 0,5 - 4 Gew.-%, bezogen auf lösungsmittelfreien Klebstoff. Bevorzugt ist die Verwendung von 1,5 - 2,5 Gew.-% der mehrfunktionellen aromatischen Nitrosoverbindungen, insbesondere die Verwendung von 1,5 - 2,5 Gew.-% 1,4-Dinitrosobenzol oder die entsprechende Menge von 1,4-Dinitrosobenzol-haltigen Zubereitungen. Die mehrfunktionellen aromatischen Nitrosoverbindungen können bei der Herstellung der erfindungsgemäßen Klebstoffe als Lösung oder als Dispersion in Nichtlösungsmitteln eingesetzt werden. Für viele Anwendungen sind 30 - 40 Gew.-%ige Lösungen von Dinitrosobenzol in beispielsweise Xylol, Toluol oder Methylisobutylketon geeignet.

...

Die erfindungsgemäßen Klebstoffe können als einkomponentige oder als zweikomponentige Polyurethanklebstoffe eingesetzt werden. Bei der Verwendung als einkomponentige Zubereitungen erfolgt die Härtung durch Feuchtigkeit, die aus der Umgebung oder aus den Fasern in das Klebematerial eindifundiert. Es ist jedoch auch möglich, durch Zugabe einer Härterkomponente, etwa eines mehrfunktionellen Alkoholes oder eines mehrfunktionellen Amins auszuhärten. Geeignete Härter sind Polyester, Polyether oder Polyamide mit OH-Endgruppen oder Aminoendgruppen.

Die erfindungsgemäßen Klebstoffe enthalten als weitere Komponenten übliche, an sich bekannte, Polyurethanprepolymere mit Isocyanatendgruppen. Es kann hier zwischen zahlreichen in der Praxis verwendeten Produkten gewählt werden. Geeignet sind beispielsweise Polymere auf Basis Polypropylenglykol - Diphenylmethandiisocyanat. Bevorzugt ist hier die Verwendung von Polypropylenglykolen mit einem Molekulargewicht zwischen 500 und 5000 und insbesondere 1000 bis 2000. Weitere mögliche Prepolymere mit Isocyanatendgruppen sind Umsetzungsprodukte von Rizinusöl (OH-Zahl ca. 161) mit Diphenylmethandiisocyanat oder anderen aromatischen Diisocyanaten. Weiterhin verwendet werden können auch die Umsetzungsprodukte von Polybutadien - Polyolen mit aromatischen Diisocyanaten, insbesondere mit Diphenylmethandiisocyanat. Besonders geeignete Polybutadien-Polyole haben Molekulargewichte zwischen 500 und 6000, insbesondere zwischen 2000 und 4000 und weisen eine OH-Zahl von beispielsweise 30 bis 80 auf. Eine weitere Gruppe von Polyurethanprepolymeren mit Isocyanatendgruppen sind die Umsetzungsprodukte aromatischer Diisocyanate insbesondere von Diphenylmethandiisocyanat, mit Polytetrahydrofuran. Geeignete Polytetrahydrofurane sind insbesondere solche mit Molgewicht 500 bis 3000 und einer OH-Zahl im Bereich von 50 bis 150. Schließlich können als Polyurethanprepolymere mit Isocyanatendgruppen auch die Umsetzungsprodukte von Toluylendiisocyanat mit Mischungen aus Polypropylenglykol und Rizinusöl eingesetzt werden. Ebenso können auch die Umsetzungsprodukte von Polycaprolacton mit aromatischen Diisocyanaten, insbesondere Diphenylmethandiisocyanat verwendet werden. Geeignete Polycaprolactone weisen Molekulargewichte zwischen 500 und 4000 auf und eine OH-Zahl zwischen 30 und 80. Schließlich sind zahlreiche Umsetzungsprodukte von aliphatischen oder aliphatisch aromatischen Polyestern im Molgewichtsbereich um 2000, insbesondere zwischen 1000 und 8000 geeignet, die ebenfalls mit aromatischen Diisocyanaten, insbesondere Diphenylmethandiisocyanat umgesetzt worden sind. In allen genannten Fällen ist es möglich, Diphenylmethandiisocyanat durch Paraphenylendiisocyanat und Xylylendiisocyanat zu ersetzen. Weiterhin ist es möglich, die Alkoholkomponente als Härter für den Polyurethan-Klebstoff einzusetzen.

Mit den erfindungsgemäßen Klebstoffen können nichtvulkanisierte Elastomere beflockt werden. Man geht hierzu von den Stoffgemischen aus, die üblicherweise vor der Vulkanisation vorliegen. Derartige Stoffgemische sind bekannt, sie enthalten neben den Polymeren übliche Hilfsstoffe, wie z.B. Fettsäuren, Oxide des Magnesiums, Calciums oder Zinks, Vulkanisationsbeschleuniger andere Vulkanisationshilfsmittel, Stabilisatoren, Lösungsmittel, Füllstoffe und weitere Hilfsstoffe. Die nicht vulkanisierten Gegenstände werden in die gewünschte Form gebracht und mit dem Klebstoff beschichtet; es werden dann in einem elektrostatischen Feld die Fasern aufgebracht. Nach Er-

...

reichen einer Anfangsfestigkeit wird sodann in üblicherweise d.h. bei Temperaturen zwischen 120 und 180 °
während 5 bis 60 Minuten vulkanisiert, wobei gleichzeitig
der Klebstoff aushärtet.

Zur Beschichtung vulkanisierter Elastomerer, also z.B.
von Gummiplatten wird der Beflockungskleber aufgesprüht
oder aufgestrichen, elektrostatisch beflockt und anschließend die Verklebung bei Temperaturen von 100 bis
140 ° und Zeiten um 10 Minuten gehärtet.

Mit den erfindungsgemäßen Klebstoffen können Elastomere
unterschiedlichster Art und Herkunft vor oder nach
Vulkanisation beflockt werden. So kann z.B. Naturkautschuk beflockt werden, weiterhin können auch polare
Kautschuktypen, wie Nitrilkautschuk, Chlorbutadien
oder chlorierte Isoprene beflockt werden. Weiterhin sind
die Klebstoffe auch zur Beflockung von Butylkautschuk
oder von Elastomeren auf Basis Styrol-Butadien oder
Styrol-Isopren geeignet. Bevorzugt ist jedoch die Verwendung bei der Beflockung unpolarer Elastomertypen insbesondere bei der Beflockung von Elastomeren auf Basis
von Terpolymeren aus Ethylen, Propylen und Dienmonomeren,
wie z.B. Diethylidennorbornen. Derartige Elastomere
werden in unterschiedlicher Form im Handel angeboten.
Sie werden allgemein unter der Bezeichnung EPDM zusammengefaßt und haben in letzter Zeit aufgrund ihrer
sehr guten Bewitterungseigenschaften an Bedeutung gewonnen.

Die Auswahl des Fasermaterials, das mit Hilfe der erfindungsgemäßen Klebstoffe auf die Elastomeren oder aber
auch auf andere flexible Untergründe, wie beispielsweise

- 10 -

auf Polyethylen-oder Polypropylenfolien oder andere Folienmaterialien aufgebracht werden kann, ist nicht kritisch. So können Polyesterfasern, wie z.B. Polyethylenglykoltherephthalat, Polyamidfasern, wie z.B. Nylon 6 oder Nylon 6.6, Polyurethanfasern, Kunstseide, Baumwolle und/oder Cellulosefasern aufgeflockt werden. Vorzugsweise werden Faserschnitte verwendet, die eine mittlere Länge zwischen 0,2 mm und 2 mm aufweisen.

Die unter Verwendung der erfindungsgemäßen Klebstoffe hergestellten beflockten Gegenstände sind vielseitig verwendbar. So können z.B. Profile aus Elastomeren beflockt werden, die in der Automobilindustrie als Fensterschachtauskleidungen verwendet werden. Weiterhin können auch beflockte Matten oder beflockte biegsame Wellen, beflockte Fußbodenbeläge, beflockte Gummihandschuhe, Hafttafeln für Demonstrationszwecke, beflockte Putzwalzen für die Spinnereimaschinenindustrie, Textilhülsen und ähnliches hergestellt werden.

. . .

- 11 -

B e i s p i e l e


In den folgenden Beispielen wurden die mit A, B und C
bezeichneten Kautschukmischungen eingesetzt. Nachstehend
werden die Zusammensetzung der Mischung sowie die
Vulkanisationsbedingungen angegeben:


A)


| | |
|---|---|
| Styrolbutadienkautschuk | 50,0 Teile |
| Chloroprenkautschuk | 50,0 " |
| Stearinsäure | 1,0 " |
| MgO | 2,0 " |
| Mercaptobenzimidazol | 0,5 " |
| N-Isopropyl-N-p-Phenylendiamin | 1,0 " |
| Kohlenwasserstoffharz | 1,0 " |
| Ruß | 140,0 " |
| Mineralöl (naphthenisch) | 10,0 " |
| CaO Oberfläche behandelt mit Stearinsäure | 5,0 " |
| ZnO | 5,0 " |
| 2- Mercaptoimidazolin | 0,5 " |
| Tetramethylthiurammonosulfid | 1,0 " |
| Di-o-tolylguanidin | 0,5 " |
| Schwefel | 0,8 " |

Vulkanisationsbedingung: 160°C  10 min

. . .

B)

| | | |
|---|---|---|
| 2-Chlorbutadien  Moonyviskosität ML ( 100°C ) 30-60 | 100,0 | Teile |
| Stearinsäure | 0,5 | " |
| MgO | 4,0 | " |
| Mercaptobenzimidazol | 0,5 | " |
| N-Isopropyl-N'-p-Phenylendiamin | 1,0 | " |
| Kohlenwasserstoffharz | 1,0 | " |
| Ruß | 140,0 | " |
| Öle mit naphthenischem Charakter Viskosität 50°C 200 cSt | 10,0 | " |
| CaO  Oberfläche behandelt mit Stearinsäure | 5,0 | " |
| ZnO | 5,0 | " |
| Tetramethylthiurammonosulfid | 1,0 | " |
| Di-o-tolylguanidin | 1,0 | " |
| Schwefel | 0,5 | " |

Vulkanisationsbedingung: 160°C   20 min

C)

| | | |
|---|---|---|
| Ethylenpropylenterpolymer-Kautschuk | 100,0 | Teile |
| Stearinsäure | 1,0 | " |
| ZnO | 5,0 | " |
| Ruß | 100,0 | " |
| CaO | 10,0 | " |
| Kreide  Oberfläche behandelt mit Stearinsäure | 50,0 | " |
| Zink-Mercaptobenzthiazol | 1,2 | " |
| Zink-Ethylphenyldithiacarbamat | 3,0 | " |
| Dipentamethyl-thiuramtetrasulfid | 2,0 | " |
| Schwefel | 0,4 | " |

Vulkanisationsbedindung:  160°C   10 min

...

Es wurden durch Lösen und Dispergieren in organischen
Lösungsmittelgemischen, wie z.B. Xylol, Toluol, Methylisobutylketon und Ethylenchlorid u.s.w. Klebstoffe
aus folgenden Substanzen hergestellt:

1) Triglycidylisocyanurat - Diphenylmethandiisocyanat
   (= MDI)-Addukt (Molverhältnis 1:3)

2) Polypropylenglykol (Molgewicht ca. 1000 OH-Zahl 110)
   MDI-Addukt

3) Rizinusöl / OH-Zahl 161 trifunktionell)
   MDI-Addukt

4) Polybutadienpolyol (Molgewicht 2800 OH-Zahl 47)
   MDI-Addukt

5) Polytetrahydrofuran (Molgewicht 1000 OH-Zahl 110)
   MDI-Addukt

6) Polypropylenglykol/Rizinusöl-Gemisch Toluylendiisocyanat (TDI)-Addukt

7) Polycaprolacton (Molgewicht 2000 OH-Zahl 56)
   MDI-Addukt

8) Polyesterdiol (Ester aus Adipinsäure/Isophthalsäure
   und Diethylenglykol Molgewicht 1900 OH-Zahl 58)
   MDI-Addukt

## Tabelle 1

| Substanz | Klebstoffe | | | | |
|---|---|---|---|---|---|
| | I | III | V | VII | IX |
| 1 | 30 | 30 | 20 | 30 | 20 |
| 2 | 70 | 30 | 40 | 30 | – |
| 3 | – | 40 | – | – | 20 |
| 4 | – | – | 40 | – | – |
| 5 | – | – | – | 20 | 20 |
| 6 | – | – | – | 20 | 20 |
| 7 | – | – | – | – | – |
| 8 | – | – | – | – | 20 |

## Tabelle 1 a

**Vergleichsversuche**

| Substanz | Klebstoffe | | | | |
|---|---|---|---|---|---|
| | II | IV | VI | VIII | X |
| 1 | – | – | – | – | – |
| 2 | 100 | 30 | 50 | 40 | 20 |
| 3 | – | 70 | – | – | 20 |
| 4 | – | – | 50 | – | – |
| 5 | – | – | – | 30 | 20 |
| 6 | – | – | – | – | 20 |
| 7 | – | – | – | 30 | – |
| 8 | – | – | – | – | 20 |

...

Es wurden die in der Tabelle 1 und 1 a aufgeführten
Beflockungskleber I-X für die Beflockungsversuche eingesetzt. Hierzu wurden Gummiplatten (15 x 20 cm) aus SBR
(Mischung A), CR (Mischung B) und EPDM (Mischung C)
unter den eingangs angegebenen Bedingungen hergestellt.
Die Oberfläche der Gummiplatten wurden durch Abwaschen
mit Xylol gereinigt, mit den Haftmitteln im Streichauftrag beschichtet und anschließend elektrostatisch
beflockt. Als Flocken wurden 0,75 mm lange Polyester-
Flocken eingesetzt. Die Trocknung der Haftmittel erfolgte
bei 120 $^\circ$C während ca. 10 min. Nach ca. 10- bis 15-
stündiger Lagerung bei Raumtemperatur wurden die beflockten Gummiteile dem Abriebtest mit einem Dorn im
Reibechtheitsprüfgerät unterzogen. Die Ergebnisse sind
in der Tabelle 2 aufgeführt.

Der Abriebtest wurde mit Hilfe des Reibechtheitstestes
FEK-VESLIC der Firma Kueny  (Muttenz CH) durchgeführt.
Dazu wurde in Anlehnung an eine in der Lederindustrie
übliche Prüfmethode ein mit 500 g belasteter meiselähnlicher Gegenstand über das beflockte Werkstück geführt. (Frequenz 40 min$^{-1}$)

## Tabelle 2

| Klebstoffe | Anzahl der Zyklen | | |
|---|---|---|---|
| | Mischung A | Mischung B | Mischung C |
| I | 80 - 90 | 60 - 90 | 50 - 70 |
| II | 40 - 50 | 20 - 40 | 5 - 10 |
| III | 50 - 60 | 40 - 50 | 40 - 50 |
| IV | 20 - 30 | 30 - 40 | 5 - 10 |
| V | 90 -100 | 100 -110 | 60 - 70 |
| VI | 30 - 40 | 40 - 50 | 10 - 20 |
| VII | 90 -100 | 120 -140 | 80 - 90 |
| VIII | 50 - 60 | 60 - 70 | 30 - 40 |
| IX | 100 -120 | 100 -120 | 40 - 50 |
| X | 70 - 80 | 40 - 50 | 20 - 30 |

Die wie bereits beschriebenen hergestellten Prüfkörper wurden in heißem Wasser bei 80 $^{\circ}$C 5 Tage lang gelagert. Danach aus dem Wasser herausgenommen, getrocknet und nach ca. 1 - bis 2-stündiger Lagerung bei Raumtemperatur dem Abriebtest unterzogen. Die Ergebnisse sind in der Tabelle 3 zusammengefaßt.

Tabelle 3

| Klebstoffe | Anzahl der Zyklen Wasserlagerung    5 d    80 °C | | |
| --- | --- | --- | --- |
| | Mischung A | Mischung B | Mischung C |
| I | 10 – 15 | 15 – 20 | 10 – 15 |
| II | 5 – 8 | 3 – 5 | 3 – 5 |
| III | 15 – 20 | 15 – 20 | 10 – 15 |
| IV | 10 – 12 | 10 – 12 | 8 – 10 |
| V | 15 – 20 | 15 – 20 | 15 – 20 |
| VI | 5 – 10 | 10 – 12 | 5 – 10 |
| VII | 15 – 20 | 20 – 25 | 15 – 20 |
| VIII | 5 – 8 | 10 – 12 | 5 – 8 |
| IX | 20 – 25 | 25 – 30 | 20 – 25 |
| X | 10 – 15 | 14 – 18 | 8 – 10 |

0129808

## Mit aromatischen Nitrosoverbindungen verbesserte Klebstoffe

### Beispiele

Es wurden durch Lösen und Dispergieren in organischen Lösungsmittelgemischen, z.B. Xylol, Toluol, Methylisobutylketon 1 : 1 : 1 Klebstoffe aus folgenden Substanzen hergestellt:

1.) Triglycidylisocyanurat-4.4'-Diphenylmethandiisocyanat-Addukt (Molverhältnis 1 : 3)

2.) Polypropylenglykol (Molgewicht ca. 1000, OH-Zahl 110) 4,4'-Diphenylmethandiisocyanat-Addukt (Molverhältnis 1 : 2)

3.) Rizinusöl (OH-Zahl 161 trifunktionell) 4,4'-Diphenylmethandiisocyanat-Addukt (Molverhältnis 1 : 3)

4.) p-Dinitrosobenzol (Feststoff)

In der nachstehenden Tabelle sind die Klebstoffe XI-XIV aufgeführt.

| Substanz | XI | XII | XIII | XIV |
|---|---|---|---|---|
| 1 | 30 | 30 | 30 | 27,5 |
| 2 | 70 | 68 | 30 | 30 |
| 3 | -- | -- | 40 | 40 |
| 4 | -- | 2 | -- | 2,5 |

...

Hierzu wurden Gummiplatten 15 x 20 cm aus Styrolbutadiengummi (SBR, Mischung A) und Ethylenpropylendienpolymergummi (EPDM, Mischung C) wie vorstehend beschrieben hergestellt und beflockt. Der vorstehend beschriebene Abriebtest erbrachte die folgenden Ergebnisse:

| Klebbestoff | Anzahl der Zyklen | |
|---|---|---|
| | Mischung A | Mischung C |
| XI | 80 - 90 | 50 - 70 |
| XII | 150 - 200 | 200 - 250 |
| XIII | 50 - 60 | 40 - 50 |
| XIV | 100 - 120 | 120 - 150 |

Weiterhin wurde der Abriebtest bei den bei 80°C 5 Tage
in heißem Wasser gelagerten Prüfkörpern vorgenommen.
Die Ergebnisse sind in der nachstehenden Tabelle aufgeführt.

| Klebstoff | Anzahl der Zyklen | |
|---|---|---|
| | Wasserlagerung 5 d 80°C | |
| | Mischung A | Mischung C |
| XI | 10 - 15 | 10 - 15 |
| XII | 30 - 40 | 40 - 50 |
| XIII | 15 - 20 | 10 - 15 |
| XIV | 30 - 35 | 40 - 45 |

. . .

- 20 -

## Patentansprüche

1. Klebstoff für die elektrostatische Beflockung flexibler Substrate, bestehend aus

   - Polyurethanprepolymeren mit Isocyanatendgruppen
   - Lösungs- und/oder Dispergiermitteln und gewünschtenfalls
   - weiteren Hilfsstoffen,

   dadurch gekennzeichnet, daß er als Haftverbesserer ein Umsetzungsprodukt mehrfunktioneller Epoxide mit aromatischen Diisocyanaten in einer Menge von 10 - 80 Gewichtsprozent - bezogen auf Polyurethanprepolymere - enthält.

2. Klebstoffe nach Anspruch 1, dadurch gekennzeichnet, daß als weitere Hilfsstoffe mehrfunktionelle aromatische Nitrosoverbindungen darin vorliegen.

3. Klebstoffe nach Anspruch 1 und 2, dadurch gekennzeichnet, daß als mehrfunktionelle aromatische Nitrosoverbindung 1,4-Dinitrosobenzol vorliegt.

4. Klebstoffe nach den Ansprüchen 1 - 3, dadurch gekennzeichnet, daß die mehrfunktionellen aromatischen Nitrosoverbindungen in Mengen von 0,5 - 4 Gew.-%, vorzugsweise 1,5 - 2,5 Gew.-%, jeweils bezogen auf den lösungsmittelfreien Klebstoff, darin vorliegen.

5. Klebstoffe nach den Ansprüchen 1 - 4, dadurch gekennzeichnet, daß er als Haftverbesserer ein Umsetzungsprodukt cyclischer N-Glyciayl-Verbindungen mit aromatischen Diisocyanaten im Verhältnis 1 mol
Diisocyanat pro mol Epoxidgruppe enthält, insbesondere ein Umsetzungsprodukt von Triglycidylisocyanurat,
Triglycidylurazol, Diglycidylbenzimidazolon, Diglycidylhydantoin und/oder kondensierten Glycidylhydantoinen mit Diphenylmethandiisocyanat, Toluylendiisocyanat, Paraphenylendiisocyanat und/oder Xylylendiisocyanat.

6. Klebstoffe nach den Ansprüchen 1 - 4, dadurch gekennzeichnet, daß er als Haftverbesserer ein Umsetzungsprodukt einer mehrfunktionellen Epoxidverbindung
auf Basis Bisphenol A mit einem aromatischen Diisocyanat, insbesondere Diphenylmethandiisocyanat, Toluylendiisocyanat, Paraphenylendiisocyanat und/oder
Xylylendiisocyanat im Molverhältnis 1 : 2 enthält.

7. Klebstoffe nach den Ansprüchen 1 - 6, dadurch gekennzeichnet, daß die Haftverbesserer in Mengen von
20 - 50 Gew.-%, bezogen auf Polyurethanprepolymere,
vorliegen, wobei Polyurethanprepolymere und Haftverbesserer insgesamt in Mengen von 20 - 50 %, bezogen
auf Klebstoffzubereitung, vorhanden sind.

8. Verwendung der Klebstoffe nach den Ansprüchen 1 - 7
bei der elektrostatischen Beflockung flexibler Substrate, insbesondere von vulkanisierten Elastomeren
mit Fasern, vorzugsweise mit Textilfasern.

9. Ausgestaltung nach Anspruch 8, dadurch gekennzeichnet,
daß man die Klebstoffe beim Beflocken unpolarer
Elastomerer, insbesondere beim Beflocken von Elastomeren auf Basis von Ethylenpropylendienterpolymeren
mit Polyesterfasern, Polyamidfasern und/oder Polyurethanfasern verwendet.

...

10. Ausgestaltung nach den Ansprüchen 8 und 9, dadurch gekennzeichnet, daß man die Klebstoffe beim Beflocken unvulkanisierter Kautschukmischungen (unvulkanisierter Elastomerer) insbesondere von Kautschukmischungen auf Basis von Ethylenpropylendienterpolymeren verwendet.